# EUROPEAN PATENT APPLICATION

(11) **EP 2 143 937 A2**
(43) Date of publication of application: **13.01.2010**
(21) Application number: 09163741.3
(22) Date of filing: 25.06.2009
(51) Int. Cl.: F03D 1/00, F03D 11/04

(54) **Cable bridge for a wind turbine tower**

(30) Priority: 08.07.2008 US 169310
(71) Applicant: General Electric Company, Schenectady, NY 12345 (US)
(72) Inventor: Lyness, Thomas E., Greer, SC 29650 (US); Kumar, S. Senthil, 620012, Tamil Nadu (IN); Stephens, Kharyl E.G., Greenville, SC 29615 (US); Faust, Wolfgang, 48529, Niedersachsen (DE)
(74) Representative: Bedford, Grant Richard

(57) **Abstract**

A wind turbine 2 includes a tower 4 having at least one joint 20; at least one cable 24 extending across the at east one joint 20; and a cable bridge 50 for supporting the at least one cable 24 over the at least one joint 20.

## Description

The subject matter described here generally relates to wind turbines, and, more particularly, to a cable bridge for a wind turbine tower.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

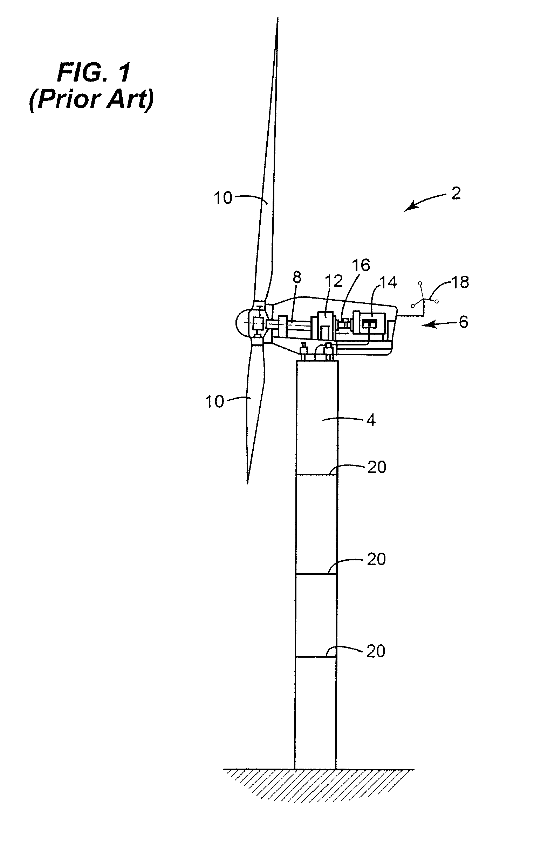

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that receives input from an anemometer 18.

The wind turbine tower 4 is typically constructed by rolling arcuate sheets of steel and securing the end of those sheets together to form closed rings. The rings are then stacked on top of each other to form the length of the tower. These rings typically have different thicknesses, with the plates getting thinner toward the top of the tower. The rings may also have different shapes, changing from cylindrical to conical as one moves up the tower. Due to the large size of the finished tower 4, and the logistical constraints against transporting such a large structure, it is impractical to assemble the entire tower 4 before it is shipped to the installation site. Therefore, as discussed in commonly-owned co-pending U.S. Application Serial No. 11/969,463 (Attorney Docket No. 229524) for "Wind Turbine Tower Joints," multiple, prefabricated ringed tower wall sections will often be shipped and then welded and/or flanged to each other at various joints 20 in wall of the tower 4.

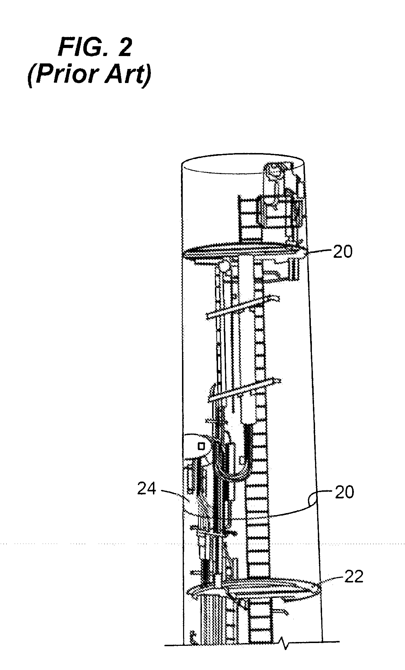

As illustrated in the partial interior view of the tower 4 shown in Figure 2, platforms 22 may be arranged inside the tower 4 for personnel to stand upon while performing various installation, operation, and maintenance tasks. For example, where the joints 20 that are provided with bolted flanges, those bolts must be periodically inspected and/or tightened. However, access to some portions of those bolted joints 20 in the wall the tower 4 may be obstructed by one or more cables 24 extending along the wall of the tower. The cables 24 are typically secured with ties or cleats to a cable tray or raceway that is fixed to the internal wall of the tower 4 in order to minimize the movement of the cables relative to the tower.

The joints 20 with flanges internal to the tower 4 obstruct the routing of the cables 24. Also, due to the need to service these flanged connection at joints 20 between the towers wall sections, the cables 24 in the vicinity of the joints must be supported in a manner that will allow access to the flange bolts behind the cables. The difficulty of temporarily repositioning these cables 24 is often compounded by the fact that the cables are tied or otherwise secured to cable trays or raceways attached to the walls of the tower 4 with little slack. Furthermore, pre-installed cables 24 may require connections to complete the circuit. Those connections must typically be crafted inside an electrical enclosure, such as a junction box, which increases the time and cost associated with completing the circuit and/or repositioning the cables 24.

Various and other drawbacks associated with such conventional approaches are addressed here in by providing, in various embodiments, a wind turbine including a tower having at least one joint; at least one cable extending across the at least one joint; and a cable bridge for supporting the at least one cable over the at least one joint.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind generator.
FIG. 2 is partial interior view of the wind turbine tower shown in FIG. 1.
FIG. 3 is an orthographic view of a cable bridge inside a wind turbine tower.
FIG. 4 is an orthographic view of another embodiment of a cable bridge for use with the wind turbine tower in FIG. 3.

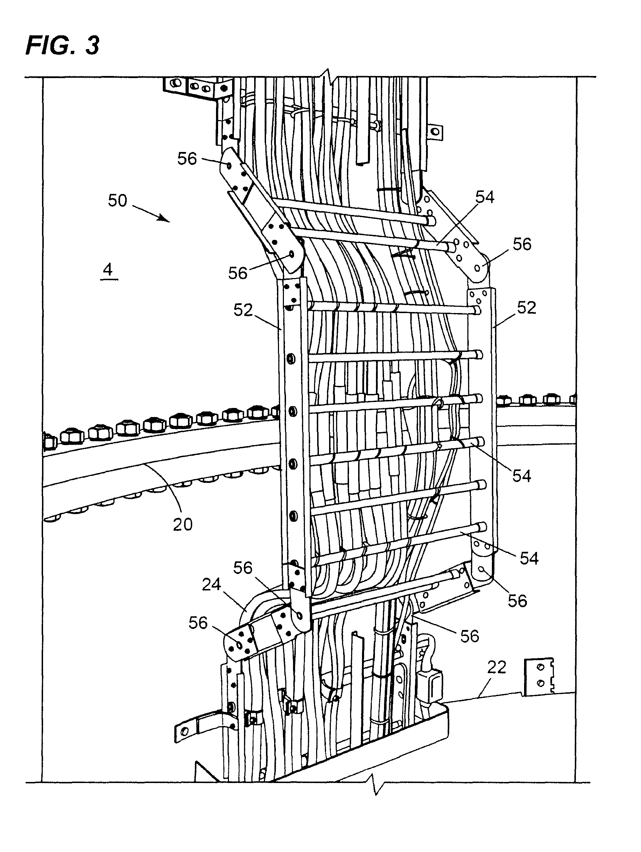

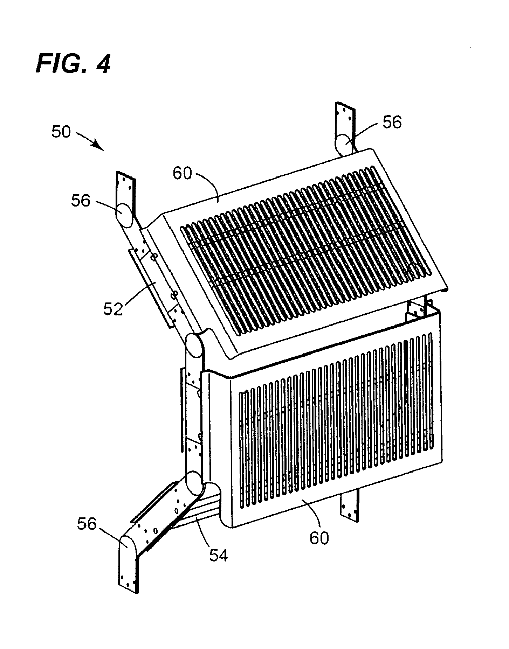

FIGs. 3 and 4 are orthographic views of two, non-limiting embodiments of a cable bridge 50 for use with the wind turbine 2 shown in FIG. 1, or any other wind turbine. Multiple cable bridges 50 may be provided in any wind turbine tower 4. Although the particular examples illustrated here show the cable bridge 50 for supporting at least one of the cables 24 over the joint 20, the cable bridge may also be used to displace the cables from the wall of the tower 4 in areas that are not near a joint. The cable bridge 50 may also be used to support the cables 24 in other configurations and/or in other areas of the tower 4. For example, the cable bridge 50 may be angled in various non-vertical positions that are not illustrated in the Figures.

In FIGs. 3 and 4, the cable bridge 50 includes a pair of articulated arms 52 and at least one support, extending between the arms, for carrying the cable. However, the cable bridge 25 may also be arranged with the support extending from the wall of the tower 4, from a single arm 52, or between more than two arms Although the arms 52 are illustrated here as being arranged in a C-shape substantially parallel to the cables 24 and extending substantially vertically, other orientations relative to the cables and/or tower 4 may also be used. For example, the arms may be arranged in an inverted C-shape, V- and inverted V-shapes, L- and inverted L-shapes, I-shapes, X-shapes, and various curved shapes such as semicircular and elliptical. The arms 52 also do necessarily need to be arranged parallel to each other.

In the illustrated examples, the ends of the arms 52 are configured as blades for fitting into channels in the cable trays or raceways arranged at each end of the cable bridge 50. The blades at the ends of the arms 52 are then bolted to the cable trays or raceways on the wall of the tower 4. However, the cable bridge may be secured to the cable trays or raceways and/or wall of the tower 4 in other ways.

Each of the illustrated parallel arms 52 has at least one hinge 56 for articulating the corresponding arm relative to the wall of the tower 4. However, additional hinges may also be provided for improved positioning of the cable bridge 50. For example, two or more hinges may be provided for allowing different sections of the arms 52 between hinges 56 to articulate substantially independently. Each of the arms 52 in the illustrated examples includes four hinges 56 that rotate about parallel horizontal axes. With four hinges 56, at least one section of each arm 52 extending between two of the hinges 56 may be arranged substantially parallel or tangential to the wall of the tower 4 in order to increase clearance between the cables 24 and the wall of the tower 4.

The hinges may also be arranged to rotate about other axes, including non-horizontal axes, and the rotational axes of the hinges 56 do not necessarily need to be parallel to each other for any single arm or pair of arms, or co-linear between pairs of arms. The hinges 56 may also be provided with additional degrees of freedom so as to rotate, and/or partially rotate, about other axes. The arms 52 may also be extendable, such as in a telescopic fashion.

In the illustrated examples, the ends of the ends of the hinges 56 are configured as blades for fitting into channels in the straight sections of the arms 52 between the hinges. The blades at the ends of the hinges 56 are then bolted to the arms 52. However, the hinges 56 may be formed continuously with the straight sections of the arms 52 and/or fastened or secured in other ways.

In the examples illustrated here, the at least one support is configured as several rungs 54 extending between each section of the arms between hinges. Each arm section is configured as a channel for receiving a blade that extends from a hinge 56. However, the blades and channels may be reversed, and the blades may be fastened or otherwise secured to the channels in other manners.

One or more of the cables 24 is then secured to one or more of the rungs 54 in any conventional manner such as through the use of cable ties or cable cleats. The cables 24 may be supported on either side of the cable bridge 50. For example, some or all of the cables 24 may be arranged on different sides of the rungs 54 in different sections of the arms 52. However, the cables 54 may also be simply draped over one or more of the rungs 54 without securing and/or secured to the rungs 54 using other means besides cable ties or cable cleats.

In addition to rungs 54, the supports for the cables 24 may be configured as a plate, tray, net, mesh, or channel for supporting and/or securing one or more of the cables 24. For example, any such plate, tray, net, mesh or channel for carrying the cables 24 may be secured to the rungs 54 and/or secured to the arms 52 with the cables 24 merely resting in or on the support. The cables 24 may also be secured directly to the arms 52. The rungs 54 may also be formed in U- or V-shapes extending between the arms 52.

As illustrated in FIG. 4, the cable bridge 50 may also be provided with one or more covers 60 extending between the arms 52 for shielding some or all of the cables 24. For example, the cover 60 may be formed from a non-conductive or electrically resistive plastic material. Although FIG. 4 illustrates the cover 60 arranged on a side of the cable bridge 50 that is opposite from the wall of the tower 4, the cover may also be arranged on the opposite side of the cable bridge. Two covers 60 may also be provided on opposite sides of the cable bridge 50. The covers 60 may also be removeably and/or hingedly secured to the arms 52 so as to provide easy access to the cables and/or any cable connectors arranged behind the covers. The cover 60 may also be provided with the embodiment illustrated in FIG. 3.

The technology described above offers various advantages over conventional approaches. For example, when supported by the cable bridge 50, the cables 24 are not subjected to abrasion due to contact with the tower joint 20 such as may occur movement of the tower 4 during operation. The cable bridge 50 also protects the cables from damage stemming from activities conducted by personnel within the tower 4. In addition, the cable bridge 50 provides a safe location to arrange and splices, connectors, switchgear, and/or other electrical equipment that may be further protected by the cover 60 without the need for an electrical cabinet, junction box, or other protective barrier/enclosure. The cable bridge therefore also reduces the amount of time that it takes to assemble the tower. For example, the various hinges 56 in the arms 52 allow the cable bridge 50 to be easily configured to accommodate various tower and cable tray/raceway configurations.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention will now be defined by the following numbered clauses:
1. A wind turbine, comprising:
   a tower having at least one joint;
   at least one cable extending across the at east one joint; and
   a cable bridge for supporting the at least one cable over the at least one joint.
2. The wind turbine recited in clause 1, wherein the cable bridge comprises:
   a pair of articulated arms; and
   at least one support, extending between the arms, for carrying the at least one cable.
3. The wind turbine recited in any preceding clause, wherein the at least one support comprises a plurality of rungs extending between the arms.
4. The wind turbine recited in any preceding clause, wherein the cable bridge comprises a cover, extending between the arms, for shielding the at least one cable.
5. The wind turbine recited in any preceding clause, wherein the cable bridge comprises a cover for shielding the at least one cable.
6. The wind turbine recited in any preceding clause, wherein the cable bridge comprises a cover for shielding the at least one cable.
7. The wind turbine recited in any preceding clause, wherein the cover extends between the arms of the cable bridge which is opposite from the at least one joint.
8. A wind turbine, comprising:
   a tower having at least one joint;
   at least one cable secured to an internal wall of the tower and extending across the at least one joint;
   a cable bridge for supporting the at least one cable over the at least one joint, the cable bridge comprising:
      a pair of arms arranged substantially parallel to the at least one cable; each arm having at least two hinges for articulating the corresponding arm relative to the wall; and
      at least one support, extending between the arms, for carrying the at least one cable.
9. The wind turbine recited in clause 8, wherein the at least two hinges comprise at least four hinges.
10. The wind turbine recited in clause 8 or 9, wherein the arms articulate in a substantially vertical plane.
11. The wind turbine recited in any of clauses 8 to 10, wherein the arms articulate in a substantially vertical plane.
12. The wind turbine recited in any of clauses 8 to 11, wherein each arm comprises a plurality of sections, with each section extending between two of the hinges; and
   at least one section of each arm is arranged substantially parallel to the wall of the tower.
13. The wind turbine recited in any of clauses 8 to 12, wherein the support comprises a plurality of rungs extending between the arms.
14. The wind turbine recited in any of clauses 8 to 13, the cable bridge further comprises a cover for shielding the at least one cable.
15. The wind turbine recited in any of clauses 8 to 14, wherein the cover extends between the arms on a side of the cable bridge which is opposite from the at least one joint.
16. A method of rapidly assembling a wind turbine tower, comprising:
   providing a first tower section relative to a second tower section defining a joint; and
   providing a cable bridge at the joint.
17. The method of clause 16, wherein the joint couples the first tower section to the second tower section.

## Claims

1. A wind turbine (2), comprising:
a tower (4) having at least one joint (20);
at least one cable (24) extending across the at east one joint (20); and
a cable bridge (50) for supporting the at least one cable (24) over the at least one joint (20).

2. The wind turbine (2) recited in claim 1, wherein the cable bridge (50) comprises:
a pair of articulated arms (52); and
at least one support (54), extending between the arms (42), for carrying the at least one cable (24).

3. The wind turbine (2) recited in claim 2, wherein the at least one support (54) comprises a plurality of rungs (54) extending between the arms (52).

4. The wind turbine (2) recited in any preceding claim, wherein the cable bridge (54) comprises a cover (60), extending between the arms (52), for shielding the at least one cable (24).

5. The wind turbine (2) recited in any preceding claim, wherein the cable bridge (54) comprises a cover (60) for shielding the at least one cable (24).

6. The wind turbine (2) recited in claim 5, wherein the cover (60) extends between the arms (52) of the cable bridge (50) which is opposite from the at least one joint (20).

7. A wind turbine (2), comprising:
a tower (4) having at least one joint (20);
at least one cable (24) secured to an internal wall of the tower (4) and extending across the at least one joint (20);
a cable bridge (50) for supporting the at least one cable (24) over the at least one joint, the cable bridge comprising:
a pair of arms (52) arranged substantially parallel to the at least one cable (24);
each arm (52) having at least two hinges (56) for articulating the corresponding arm relative to the wall; and
at least one support (54), extending between the arms (52), for carrying the at least one cable (24).

8. The wind turbine (2) recited in claim 7, wherein the at least two hinges (56) comprise at least four hinges (56).

9. The wind turbine (2) recited in claim 7 or claim 8, wherein the arms (52) articulate in a substantially vertical plane.

10. The wind turbine (2) recited in any of claims 7 to 9, wherein each arm (52) comprises a plurality of sections, with each section extending between two of the hinges (56); and
at least one section of each arm (52) is arranged substantially parallel to the wall of the tower (4).

11. The wind turbine (2) recited in any of claims 7 to 10, wherein the support (54) comprises a plurality of rungs (54) extending between the arms (52).

12. The wind turbine (2) recited in any of claims 7 to 11, the cable bridge (50) further comprising a cover (60) for shielding the at least one cable (24).

13. The wind turbine (2) recited in claim 12, wherein the cover (60) extends between the arms (52) on a side of the cable bridge (50) which is opposite from the at least one joint (20).

14. A method of rapidly assembling a wind turbine tower (4), comprising:
providing a first tower section relative to a second tower section defining a joint (20); and
providing a cable bridge (50) at the joint (20).

15. The method of claim 14, wherein the joint (20) couples the first tower section to the second tower section.
